# EUROPEAN PATENT SPECIFICATION

(11) **EP 1 413 353 B1**
(45) Date of publication and mention of the grant of the patent: **23.08.2006**
(21) Application number: 03023825.7
(22) Date of filing: 20.10.2003
(51) Int. Cl.: B01J 19/00, B01L 3/02, B01L 3/00

(54) **Chemical array linking layers**
Chemische Arrays mit Verbindungsschicht
Matrices chimiques avec couche de liaison

(30) Priority: 25.10.2002 US 281289
(43) Date of publication of application: 28.04.2004
(73) Proprietor: Agilent Technologies Inc. (a Delaware Corporation), Palo Alto, CA 94306-2024 (US)
(72) Inventor: Peck, Bill J., Mountain View, CA 94043 (US); Leproust, Eric M., San Jose, CA 95125 (US)
(74) Representative: Schoppe, Fritz

(56) References cited:
- US-A- 5 556 752
- US-B1- 6 242 266
- US-B1- 6 319 674

## Description

### FIELD OF THE INVENTION

This invention relates to arrays, such as polynucleotide arrays (for example, DNA arrays), which are useful in diagnostic, screening, gene expression analysis, and other applications.

### BACKGROUND OF THE INVENTION

In the following discussion and throughout the present application, while various references are cited no cited reference is admitted to be prior art to the present application.

Chemical arrays, such as polynucleotide or protein arrays (for example, DNA or RNA arrays), are known and are used, for example, as diagnostic or screening tools. Polynucleotide arrays include regions of usually different sequence polynucleotides arranged in a predetermined configuration on a substrate. These regions (sometimes referenced as ∼features") are positioned at respective locations (-addresses ") on the substrate. The arrays, when exposed to a sample, will exhibit an observed binding pattern. This binding pattern can be detected upon reading the array. For example all polynucleotide targets (for example, DNA) in the sample can be labeled with a suitable label (such as a fluorescent compound), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Biopolymer arrays can be fabricated by depositing previously obtained biopolymers (such as from synthesis or natural sources) onto a substrate, or by *in situ* synthesis methods. Methods of depositing obtained biopolymers include loading then touching a pin or capillary to a surface, such as described in US 5,807,522 or deposition by firing from a pulse jet such as an inkjet head, such as described in PCT publications WO 95/25116 and WO 98/41531, and elsewhere. Such a deposition method can be regarded as forming each feature by one cycle of attachment (that is, there is only one cycle at each feature during which the previously obtained biopolymer is attached to the substrate). For *in situ* fabrication methods, multiple different reagent droplets are deposited by pulse jet or other means at a given target location in order to form the final feature (hence a probe of the feature is synthesized on the array substrate). The *in situ* fabrication methods include those described in US 5,449,754 for synthesizing peptide arrays, and in US 6,180,351 and WO 98/41531 and the references cited therein for polynucleotides, and may also use pulse jets for depositing reagents. The *in situ* method for fabricating a polynucleotide array typically follows, at each of the multiple different addresses at which features are to be formed, the same conventional iterative sequence used in forming polynucleotides from nucleoside reagents on a support by means of known chemistry. This iterative sequence can be considered as multiple ones of the following attachment cycle at each feature to be formed: (a) coupling an activated selected nucleoside (a monomeric unit) through a phosphite linkage to a functionalized support in the first iteration, or a nucleoside bound to the substrate (i.e. the nucleoside-modified substrate) in subsequent iterations; (b) optionally, blocking unreacted hydroxyl groups on the substrate bound nucleoside (sometimes referenced as ∼capping"); (c) oxidizing the phosphite linkage of step (a) to form a phosphate linkage; and (d) removing the protecting group (∼deprotection") from the now substrate bound nucleoside coupled in step (a), to generate a reactive site for the next cycle of these steps. The coupling can be performed by depositing drops of an activator and phosphoramidite at the specific desired feature locations for the array. A final deprotection step is provided in which nitrogenous bases and phosphate group are simultaneously deprotected by treatment with ammonium hydroxide and/or methylamine under known conditions. Capping, oxidation and deprotection can be accomplished by treating the entire substrate (∼flooding") with a layer of the appropriate reagent. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in another flooding procedure in a known manner. Conventionally, a single pulse jet or other dispenser is assigned to deposit a single monomeric unit.

The foregoing chemistry of the synthesis of polynucleotides is described in detail, for example, in Caruthers, Science 230: 281-285, 1985; Itakura et al., Ann. Rev. Biochem. 53: 323-356; Hunkapillar et al., Nature 310: 105-110, 1984; and in -Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere. The phosphoramidite and phosphite triester approaches are most broadly used, but other approaches include the phosphodiester approach, the phosphotriester approach and the H-phosphonate approach. The substrates are typically functionalized to bond to the first deposited monomer. Suitable techniques for functionalizing substrates with such linking moieties are described, for example, in US 6,258,454 and Southern, E. M., Maskos, U. and Elder, J.K., Genomics, 13, 1007-1017, 1992. In the case of array fabrication, different monomers and activator may be deposited at different addresses on the substrate during any one cycle so that the different features of the completed array will have different desired biopolymer sequences. One or more intermediate further steps may be required in each cycle, such as the conventional oxidation, capping and washing steps in the case of *in situ* fabrication of polynucleotide arrays (again, these steps may be performed in flooding procedure).

Further details of fabricating biopolymer arrays by depositing either previously obtained biopolymers or by the *in situ* method are disclosed in US 6,242,266, US 6,232,072, US 6,180,351, and US 6,171,797. In fabricating arrays by depositing previously obtained biopolymers or by the *in situ* method, typically the entire region on the substrate surface on which an array will be formed (an ∼array region") is completely exposed to one or more reagents. For example, in either method array regions will often be exposed to one or more linker compositions to form a suitable linker layer on the surface which binds to both the substrate and biopolymer or biomonomer. Particularly useful linker compositions and methods are disclosed in U.S. Patents 6,319,674 and 6,444,268 which may use various silane based compounds as linkers or other surface modifying agents (for example, to modify the surface energy to control deposited drop spread). The solution containing the silane compounds is exposed to a substrate surface in a reactor.

In array fabrication, the quantities of polynucleotide available are usually very small and expensive. Additionally, sample quantities available for testing are usually also very small and it is therefore desirable to simultaneously test the same sample against a large number of different probes on an array. These conditions require use of arrays with large numbers of very small, closely spaced features. When the array is read, such as by detecting light emitted from features in response to an interrogating light, the total detected light signal from a feature may therefore be very low. To obtain accurate readings it is important then that the features actually be present and of the expected or uniform composition within a feature. Failure to meet these conditions can result in variations in detected signal from features of the array during reading, as well as variations in detected signal across the array and from array to array, which are unrelated to the composition of a tested sample. This in turn can lead to serious errors in interpreting the results from use of an array.

It would be desirable then to provide arrays which has only a low variation in expected feature qualities, both within a feature, an array and between arrays.

### SUMMARY OF THE INVENTION

The present invention recognizes that failure to provide a uniform linker composition on a substrate can lead to variations in probe density with features, within an array, and across arrays.

The present invention then, provides a method of producing a surface modified substrate which includes depositing drops (for example, from a pulse jet) which include a linking reagent, onto the surface so that the linking agent will bind to the substrate surface.

The present invention further provides a method of fabricating an array of multiple chemical probes bonded to a surface of a substrate at different features of the array using a surface modified substrate of the present invention. In this method drops which include the chemical probes or probe precursors are deposited onto the modified surface of the substrate at the multiple feature locations, so that the probes or probe precursors bind to the linking agent at the feature locations. This step of depositing chemical probe including drops, may be repeated (for example, at different feature locations or at the same feature locations) as needed so as to form the array.

In producing the surface modified substrate the drops which include the linking reagent may be deposited so as together cover an interconnected area on the substrate which may even be continuous, and to which the linking agent will then bind. For example, when an array is fabricated, they may cover a continuous area over the feature locations of the array.

Other components may also be contacted with the substrate surface. For example drops comprising a solvent may be deposited onto the surface (before or after the linking agent containing drops, or as part of the same drops as the linking agent containing drops), which drops may together cover a continuous area over the feature locations of the array. Another example is drops of an additional agent (for example, to control surface energy) deposited onto the surface, which drops together may also cover a continuous area over the feature locations of the array. These drops may be the same or different from those drops containing the linking agent, so that the additional agent will bind to the substrate surface over the covered continuous area but will not bind to the probe or probe precursors during array fabrication.

The present invention also provides an apparatus and a computer program product which can execute a method of the present invention, arrays produced by a method of the present invention, as well as a method of using an array fabricated by a method of the present invention (which may include exposing an array produced by the method to a sample, which array may then be read).

The various aspects of the present invention can provide any one or more of the following and/or other useful benefits. For example, a fairly uniform linker layer can be produced on the substrate surface which in turn helps in obtaining expected feature qualities, both within a feature, an array and between arrays

### BRIEF DESCRIPTION OF THE DRAWINGS

FIG. 1 illustrates an array assembly carrying multiple arrays, such as may be fabricated by methods of the present invention;
FIG. 2 is an enlarged view of a portion of FIG. 1 showing multiple ideal spots or features;
FIG. 3 is an enlarged illustration of a portion of FIG. 2;
FIG. 4 illustrates a method of depositing drops of a surface linking agent, additional agent such as surface energy modifier, or solvent, according to a method of the present invention; and
FIG. 5 illustrates an apparatus of the present invention which can execute a method of the present invention.

To facilitate understanding, the same reference numerals have been used, where practical, to designate the same elements that are common to the figures. Drawings are not necessarily to scale.

### DETAILED DESCRIPTION OF EMBODIMENTS OF THE INVENTION

In the present application, unless a contrary intention appears, the following terms refer to the indicated characteristics. A ∼biopolymer" is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A ∼nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a ∼biopolymer" includes DNA (including cDNA), RNA, oligonucleotides, and PNA and other polynucleotides as described in US 5,948,902 and references cited therein, regardless of the source. An ∼oligonucleotide" generally refers to a nucleotide multimer of about 10 to 100 nucleotides in length, while a ∼polynucleotide" includes a nucleotide multimer having any number of nucleotides. A ∼biomonomer" references a single unit, which can be linked with the same or other biomonomers to form a biopolymer (for example, a single amino acid or nucleotide with two linking groups one or both of which may have removable protecting groups). A biomonomer fluid or biopolymer fluid reference a liquid containing either a biomonomer or biopolymer, respectively (typically in solution).

An ∼array", unless a contrary intention appears, includes any one, two or three-dimensional arrangement of addressable regions bearing a particular chemical moiety or moieties (for example, biopolymers such as polynucleotide sequences) associated with that region. Each region may extend into a third dimension in the case where the substrate is porous while not having any substantial third dimension measurement (thickness) in the case where the substrate is non-porous. An array is ∼addressable" in that it has multiple regions of different moieties (for example, different polynucleotide sequences) such that a region (a ∼feature" or ∼spot" of the array) at a particular predetermined location (an ∼address") on the array will detect a particular target or class of targets (although a feature may incidentally detect non-targets of that feature). An array feature is generally homogenous and the features typically, but need not be, separated by intervening spaces. In the case of an array, the ∼target" will be referenced as a moiety in a mobile phase (typically fluid), to be detected by probes (∼target probes ") which are bound to the substrate at the various regions. However, either of the ∼target" or ∼target probes" may be the one which is to be evaluated by the other (thus, either one could be an unknown mixture of polynucleotides to be evaluated by binding with the other). An ∼array layout" or ∼array characteristics ", refers to one or more physical, chemical or biological characteristics of the array, such as feature positioning, one or more feature dimensions, or some indication of an identity or function (for example, chemical or biological) of a moiety at a given location, or how the array should be handled (for example, conditions under which the array is exposed to a sample, or array reading specifications or controls following sample exposure). ∼Hybridizing" and -binding", with respect to polynucleotides, are used interchangeably.

A ∼plastic" is any synthetic organic polymer of high molecular weight (for example at least 1,000 grams/mole, or even at least 10,000 or 100,000 grams/mole.

∼Flexible" with reference to a substrate or substrate web, references that the substrate can be bent 180 degrees around a roller of less than 1.25 cm in radius. The substrate can be so bent and straightened repeatedly in either direction at least 100 times without failure (for example, cracking) or plastic deformation. This bending must be within the elastic limits of the material. The foregoing test for flexibility is performed at a temperature of 20 °C.

A ∼web " references a long continuous piece of substrate material having a length greater than a width. For example, the web length to width ratio may be at least 5/1, 10/1, 50/1, 100/1, 200/1, or 500/1, or even at least 1000/1.

When one item is indicated as being ∼remote" from another, this is referenced that the two items are at least in different buildings, and may be at least one mile, ten miles, or at least one hundred miles apart. ∼Communicating" information references transmitting the data representing that information as electrical signals over a suitable communication channel (for example, a private or public network). ~Forwarding " an item refers to any means of getting that item from one location to the next, whether by physically transporting that item or otherwise (where that is possible) and includes, at least in the case of data, physically transporting a medium carrying the data or communicating the data. An array ∼assembly" may be the array plus only a substrate on which the array is deposited, although the assembly may be in the form of a package which includes other features (such as a housing with a chamber). A ∼chamber" references an enclosed volume (although a chamber may be accessible through one or more ports). It will also be appreciated that throughout the present application, that words such as ∼front", ∼back", ∼top", ∼upper", and ∼lower" are used in a relative sense only. ∼Fluid" is used herein to reference a liquid. Reference to a singular item, includes the possibility that there are plural of the same items present. ∼May" refers to optionally. Any recited method can be carried out in the ordered sequence of events as recited.

A ∼pulse jet" is any device which can dispense drops in the formation of an array. Pulse jets operate by delivering a pulse of pressure (such as by a piezoelectric or thermoelectric element) to liquid adjacent an outlet or orifice such that a drop will be dispensed therefrom.

A ∼linking layer" bound to the surface may, for example, be less than 200 angstroms or even less than 10 angstroms in thickness (or less than 8, 6, or 4 angstroms thick). Such layer may have a polynucleotide, protein, nucleoside or amino acid minimum binding affinity of 10⁴ to 10⁶ units/µ². Layer thickness can be evaluated using UV or X-ray elipsometry.

~Continuous " in reference to an area on the substrate surface references an area which is uninterrupted by any gaps within that area. The distinct features of an array may then be formed on such a continuous area.

A ∼group" in relation to a chemical formula, includes both substituted and unsubstituted forms of the group.

~Lower alkyl group " is an alkyl group with from 1 to 6 C atoms, and may only have any one of 1, 2, 3, or 4 C atoms.

∼Surface energy" is as defined in US 6,444,268.

The steps of any method herein may be performed in the recited order, or in any other order that is logically possible.

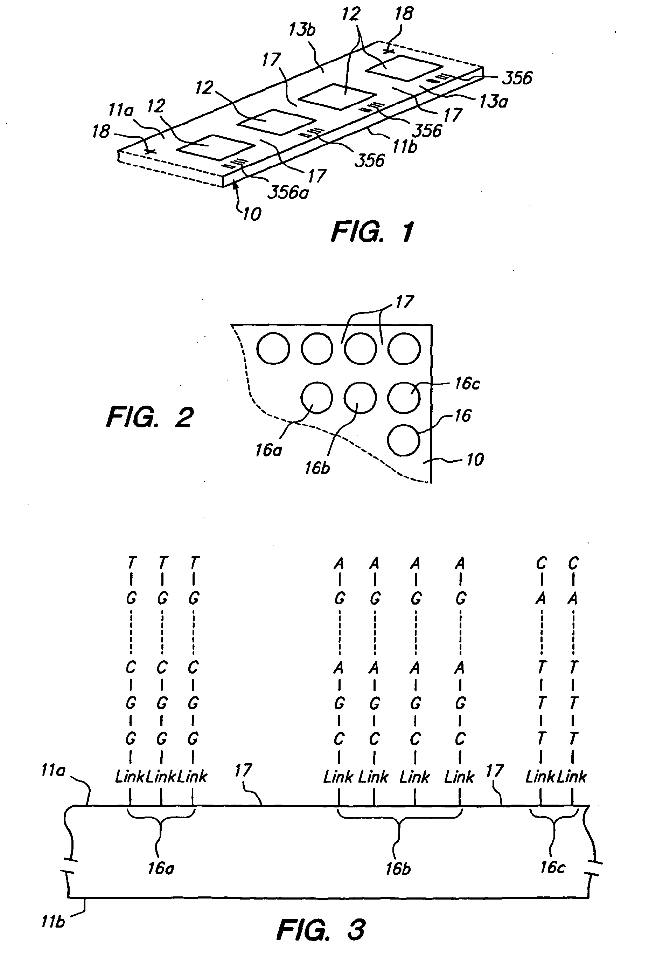

Referring first to FIGS. 1-3, methods of the present invention may generate an array assembly which includes a substrate which can be, for example, in the form of an a rigid substrate (for example, a transparent non-porous material such as glass or silica) of limited length, or in the form of an elongated flexible web (or ribbon) 10, carrying one or more arrays 12 disposed along a front surface 11a of substrate 10 and separated by inter-array areas 17. A back side 11b of substrate 10 does not carry any arrays 12. The arrays on substrate10 can be designed for testing against any type of sample, whether: a trial sample; reference sample;, a combination of the foregoing; or a known mixture of polynucleotides, proteins, polysaccharides and the like (in which case the arrays may be composed of features carrying unknown sequences to be evaluated). While four arrays 12 are shown in FIG. 1, it will be understood that substrate 10 and the embodiments to be used with it, may use any number of desired arrays 12 such as at least one, two, five, ten, twenty, fifty, or one hundred (or even at least five hundred, one thousand, or at least three thousand). When more than one array 12 is present they may be arranged end to end along the lengthwise direction of substrate 10. Depending upon intended use, any or all of arrays 12 may be the same or different from one another and each will contain multiple spots or features 16 of biopolymers in the form of polynucleotides.

A typical array 12 may contain from more than ten, more than one hundred, more than one thousand or ten thousand features, or even more than from one hundred thousand features. For example, features may have widths (that is, diameter, for a round spot) in the range from a 10 µm to 1.0 cm. In other embodiments each feature may have a width in the range of 1.0 µm to 1.0 mm, usually 5.0 µm to 500 µm, and more usually 10 µm to 200 µm. Non-round features may have area ranges equivalent to that of circular features with the foregoing width (diameter) ranges. At least some, or all, of the features are of different compositions (for example, when any repeats of each feature of the same composition are excluded, the remaining features may account for at least 5%, 10%, or 20% of the total number of features).

Each array 12 may cover an area of less than 100 cm², or even less than 50 cm², 10 cm² or 1 cm². In many embodiments, particularly when substrate 10 is rigid, it may be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm. When substrate 10 is flexible, it may be of various lengths including at least 1 m, at least 2 m, or at least 5 m (or even at least 10 m). With arrays that are read by detecting fluorescence, the substrate 10 may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, substrate 10 may transmit at least 20%, or 50% (or even at least 70%, 90%, or 95%), of the illuminating light incident on the front as may be measured across the entire integrated spectrum of such illuminating light or alternatively at 532 nm or 633 nm.

In the case where arrays 12 are formed by the conventional *in situ* or deposition of previously obtained moieties, as described above, by depositing for each feature a droplet of reagent in each cycle such as by using a pulse jet such as an inkjet type head, interfeature areas 17 will typically (but not essentially) be present which do not carry any polynucleotide. It will be appreciated though, that the interfeature areas 17 could be of various sizes and configurations. It will also be appreciated that there need not be any space separating arrays 12 from one another (for example, when arrays are fabricated using light directed techniques). Each feature carries a predetermined polynucleotide (which includes the possibility of mixtures of polynucleotides). As per usual, A, C, G, T represent the usual nucleotides. ∼Link" (see FIG. 3 in particular) represents a linking agent (molecule) covalently bound to the front surface and a first nucleotide, as provided by a method of the present invention and as further described below.

Substrate 10 also has one or more identifiers in the form of bar codes 356. Identifiers such as other optical or magnetic identifiers could be used instead of bar codes 356 which will carry the information discussed below. Each identifier may be positioned adjacent an associated array 12. However, this need not be the case and identifiers such as bar code 356 can be positioned elsewhere on substrate 10. Further, a single identifier might be provided which is associated with more than one array 12 and such one or more identifiers may be positioned on a leading or trailing end (neither shown) of substrate 10. The substrate may further have one or more fiducial marks 18 for alignment purposes during array fabrication.

FIGS. 2 and 3 illustrate ideal features 16 of an array 12 where the actual features formed are the same as the target (or ∼aim") features, with each feature 16 being uniform in shape, size and composition, and the features being regularly spaced. Such an array when fabricated by drop deposition methods, would require all reagent droplets for each feature to be uniform in shape and accurately deposited at the target feature location. In practice, such an ideal result may be difficult to obtain due to fixed and random errors during fabrication.

With regard to providing the Link groups on surface 11a, this can be accomplished by first modifying front surface 11a of substrate 10 by depositing drops containing a linking agent (such as a linking agent and a suitable solvent) onto the surface, so that the linking agent will bind to the substrate surface. Additionally, drops may be deposited which include an additional agent onto the surface, which drops may be the same or different from those containing the linking agent. In either event the deposited drops containing the linking agent and additional agent are of such a size, and are sufficiently close together, so that together such drops cover a continuous area over the surface. For example, at least 10, at least 100, at least 200, or at least 1000 drops deposited at different regions on the surface will together cover a continuous area on surface 11a. By covering a -continuous area " on the surface does not mean that the drops must simultaneously be in liquid form, but in fact some may have already dried. Instead they need only be of sufficient size and sufficiently close together such that the total final area occupied by them (dry or not) is continuous. Drops size and spacing can be adjusted by known methods particularly when pulse jets are used to deposit the drops.

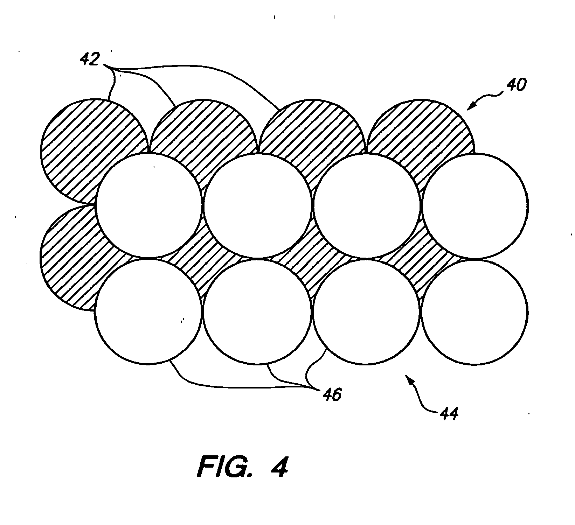

One procedure is illustrated in FIG. 4. In FIG. 4 one or more heads such as head 210 (see below) makes one pass to deposit drops of a liquid (for example, solvent, linking agent, or additional agent). In FIG. 4 eight drops 42 have been deposited to form one continuous layer 40. To ensure no gaps are present the head makes another pass to deposit the same liquid in eight drops 46 to form another continuous layer 44. Thus drops 42 and 46 together cover a continuous area (the union of the areas represented by layers 40 and 44) with no gaps. In practice, the continuous area may be the entire area of a substrate surface, or at least 50%, 25%, 10% or 5% of such area. Regardless of the foregoing, the continuous area will normally cover at least the continuous area occupied by multiple adjacent features of an array 12 to be fabricated on the substrate or the entire continuous area occupied by an array 12, with different continuous areas for different arrays 12. Alternatively, the continuous area may be at least 0.1 cm², at least 0.2 cm², or at least 0.5 cm² or 1 cm².

To produce a surface modified substrate by a method of the present invention, drops which include a solvent may be fist deposited onto the substrate surface to cover a continuous area using the method as described in connection with FIG. 4. Drops which include the linking agent may then be deposited in the manner described in connection with FIG. 4 also to cover a same continuous area as the solvent deposited drops. These drops may include an additional agent or such additional agent may be in drops deposited later to cover a same continuous area as covered by the drops containing the linking agent. In either event, the linking agent binds to the surface so that probe or probe precursors subsequently deposited in further drops at aim feature locations for an array 12 will bind to the linking agent but not to the additional agent. However, further processing of a functional group on a linking agent may be necessary for such binding to occur.

Linking agents may be any suitable linking agent which is different from any any probe or probe precursor used in fabricating the array. As to a suitable additional agents this may particularly be any of the first silanes as set out in detail US 6,444,268, while the linking agent may be any of the second silanes therein and the solvent may be as described in that patent also (for example, toluene). In one embodiment as described in the foregoing patent the first silane has the formula R¹-Si(R^{L}R^{x}R^{y}) and the second silane has the formula R²-(L)ₙ-Si(R^{L}R^{x}R^{y}) so that binding to the surface provides -Si-R¹ groups and -Si-(L)ₙ-R² groups thereon, wherein the R^{L}, moieties, which may be the same or different, are leaving groups, the R^{x} and R^{y} are independently lower alkyl or leaving groups, R¹ is a chemically inert moiety that upon binding to the substrate surface lowers the surface energy thereof, n is 0 or 1, L is a linking group, and R² is a functional group enabling covalent binding of a molecular moiety or a modifiable group that may be converted to such a functional group. Leaving groups in the foregoing may include halogen and alkoxy. Both the first and second silanes bind to the surface through reactive hydrophilic moieties thereon, which are selected from the group consisting of hydroxyl, carboxyl, thiol, amino, and combinations thereof. The foregoing terms and other embodiments of the first and second silanes, are further defined in the foregoing patent. However, in the present invention, unlike in the foregoing patent, drops of the solvent (for example, toluene) may be dispensed onto the surface 11a so that together they cover a continuous area with no gaps, as described in connection with FIG. 4. This may be followed by depositing drops of the second silane to cover the same continuous area. The drops containing the second silane may also contain the first silane. The substrate 10 may then be physically and chemically processed as described in detail in US 6,444,268. If the second silane was not present in the drops containing the first silane, then drops containing the second silane may be deposited onto the substrate surface to cover the same continuous area at this point, and allowed to react therewith for about 30 minutes. In either situation, the relative amounts of the first and second silanes can be adjusted to control surface energy as also described in detail in US 6,444,268.

In one example, two printheads 210 may be used, the first to deposit a toluene/water solvent mixture, and a second to deposit the pure or diluted mixture of the first and second silanes. Due to the low surface tension of toluene, only a few passes of the printheads are needed to obtain complete coverage of a front surface 11a of substrate 10. In particular, drops of the solvent and silane mixture are each applied in a pattern similar to that shown in FIG. 4. A total volume of 5 ml will form a 200 µm thick continuous layer of toluene/water solution or silane solution on a 15x15 cm (6 inch by 6 inch) substrate, and at the concentrations described in the foregoing patent the silane containing layer will contain enough silane to completely react with all sites on the wetted substrate surface. The substrate is then placed in a holding chamber for about 20 minutes to allow the reaction (covalent binding of the first and second silanes with reactive hydroxyls on the substrate surface) to go to completion.

In a second example, three printheads 210 may be used. One is used for depositing drops of the toluene/water mixture, and another one each for pure or diluted first and second silanes. This example is the same as in the first example, except here drops containing the first and second silanes are separately deposited. In particular, after deposition of the toluene/water solvent containing drops, drops containing the second silane are then deposited to provide a continuous layer over the substrate front surface (again, about 5 ml can be used). The concentration of the second silane is adjusted to react with only a fraction of the total sites available for reaction on the front surface. After 20 minutes waiting time at room temperature, the substrate is rinsed in toluene and dried. At this point, the linking agent will be linked to a portion of the sites on the front surface. Surface functionalization is then completed by depositing drops of toluene/water then drops containing the first silane, with the first silane concentration adjusted in excess to react with 1000 times the total sites available on the front surface of the substrate. After application the substrate is placed in a holding chamber for about 20 minutes to allow the reaction (covalent binding of the first silane to the reactive hydroxyls on the surface) to go to completion. This method will help to inhibit any artifacts resulting from ∼beading" of the solution as the formation of the self-assembling silane monolayer progresses in the presence of the first silane, and will also help inhibit formation of islands at the molecular level which might otherwise reduce the effective local concentration of hydroxyl terminated second silane (following boration and oxidation as described in US 6,444,268. Note that in both examples the atmosphere in the holding chamber is controlled to prevent excessive evaporation or surface contamination. Also, if needed, the process of either example can be repeated to ensure adequate functionalization of the substrate surface with the second silane (as well as an appropriate concentration of the first silane to obtain the desired surface energy quality). The substrate resulting from either example may then be used to fabricate an array using drop deposition in an *in situ* or another process (for example, deposition of previously obtained probe moieties, such as polynucleotides or proteins). This may be done by depositing onto the continuous functionalized area on the substrate surface, drops containing the chemical probes or probe precursors at the multiple feature locations of the array to be fabricated, so that the probes or probe precursors bind to the linking agent at the feature locations. This step may be repeated at one or more features, particularly when the *in situ* method of fabricating biopolymers is used. Such methods and their chemistry are described in detail in the references cited in the ∼Background" section above, including for example US 6,242,266, US 6,232,072, US 6,180,351, US 6,171,797, US 6,323,043, U.S. and Japanese Patent Publication No. 2001-02155 (Great Britain patent publication no. 2355716), and the references cited in them.

Use of a method of the present invention provides a relatively uniform coating easier than could be obtained by exposing the substrate to the silanes in a reaction chamber. Furthermore, when a reaction chamber is used in which the silanes are introduced as a volume of solution into the chamber to cover the substrate surface, flow characteristics within the chamber can result in variation of linker density over the surface. Such variations can lead to variations in probe density (versus the expected probe density) within a feature, across the array, and between arrays. This is particularly true where it may be desirable to inject the silanes into the solvent within the chamber, rather than as part of a solvent solution with which the chamber is filled, to reduce possible polymerization of the silanes. As substrates become larger, these problems with using a reaction chamber may become more severe. On the other hand, increases in substrate size in a method of the present invention will not have the same effect. Additionally, with a method of the present invention, unlike a reaction chamber, it is not necessary to functionalize an entire surface of the substrate. Instead, only those parts of a substrate surface on which arrays will be fabricated need to be functionalized. Other areas of the same substrate surface are then available for further reaction or use, such as for application of a silicon glue to form a gasket to retain a hybridization solution when mated with a cover, or for printing of bar codes 356 or fiducial marks 18.

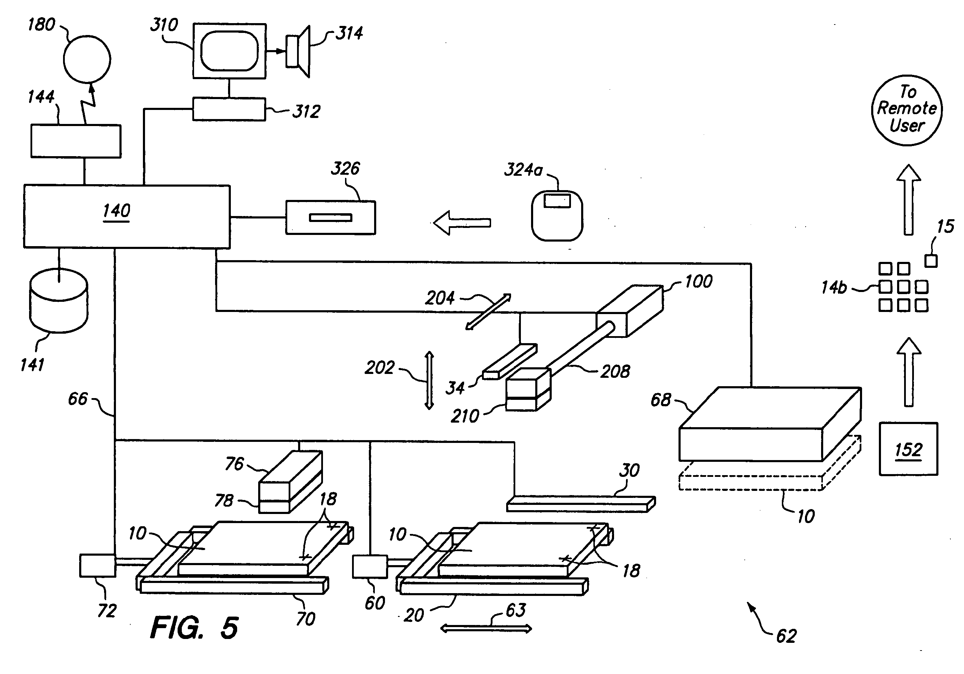

Referring now to FIG. 5, an apparatus of the present invention which can execute a method of the present invention, is illustrated. The apparatus shown essentially has two sections, a first section on which a surface of the substrate 10 can be functionalized, and a second section in which the array is fabricated on the functionalized surface of the substrate. While these two sections are shown as part of one apparatus in FIG. 5, it will be appreciated that they can be entirely separate with the first section preparing many functionalized substrates which are forwarded to the fabrication section for array fabrication, with their possibly being one or more first sections and one or more second sections remote from each other.

The first section of the apparatus of FIG. 5 includes a first substrate station 70 which can retain a mounted substrate 10, a third transporter 70, a head retainer 76, and a first drop deposition system in the form of a stationary pulse jet head 78 system. Pulse jet head system 78 can include two or three pulse jet heads which deliver drops of the solvent, linking agent, and additional agent, onto surface 11a of substrate 10 all as already described, so as to functionalize that surface. Drops are delivered from the stationary pulse jet head 78 while substrate 10 is advanced beneath it by transporter 70, all under control of a processor 140. A suitable holding chamber (not shown) may also be provided for the purposes already described during such functionalization. A mechanical means (such as a robot arm) may be provided to transfer a substrate 10 from substrate station 10 to the holding chamber, and to a second substrate station 20 when functionalization of the surface 11a is complete. Functionalization may occur in a chamber and the chambers in which holding and functionalization occur may both have a controlled atmosphere present to inhibit excessive evaporation or surface contamination, for example the controlled atmosphere may be a nitrogen atmosphere.

The second section of the apparatus of FIG. 5 includes substrate station 20 (sometimes referenced as a ∼substrate holder") on which can a substrate 10 can be mounted on retained. Pins or similar means (not shown) can be provided on substrate station 20 by which to approximately align substrate 10 to a nominal position thereon (with alignment marks 18 on substrate 10 being used for more refined alignment). Substrate station 20 can include a vacuum chuck connected to a suitable vacuum source (not shown) to retain a substrate 10 without exerting too much pressure thereon, since substrate 10 is often made of glass. A flood station 68 is provided which can expose the entire surface of substrate 10, when positioned at station 68 as illustrated in broken lines in FIG. 9, to a fluid typically used in the *in situ* process, and to which all features must be exposed during each cycle (for example, oxidizer, deprotection agent, and wash buffer). In the case of deposition of a previously obtained polynucleotide, flood station 68 need not be present.

A second drop deposition system is present in the form of a dispensing head 210 which is retained by a head retainer 208. As mentioned above though, the head system can include more than one head 210 retained by the same head retainer 208 so that such retained heads move in unison together. The transporter system includes a carriage 62 connected to a first transporter 60 controlled by processor 140 through line 66, and a second transporter 100 controlled by processor 140 through line 106. Transporter 60 and carriage 62 are used execute one axis positioning of station 20 (and hence mounted substrate 10) facing the dispensing head 210, by moving it in the direction of axis 63, while transporter 100 is used to provide adjustment of the position of head retainer 208 (and hence head 210) in a direction of axis 204 (and therefore move head 210 in the direction of travel 204a which is one direction on axis 204). In this manner, head 210 can be scanned line by line along parallel lines in a raster fashion, by scanning along a line over substrate 10 in the direction of axis 204 using transporter 100, while line to line transitioning movement of substrate 10 in a direction of axis 63 is provided by transporter 60. Transporter 60 can also move substrate holder 20 to position substrate 10 in flood station 68 (as illustrated by the substrate 10 shown in broken lines in FIG. 9). Head 210 may also optionally be moved in a vertical direction 202, by another suitable transporter (not shown) and its angle of rotation with respect to head 210 also adjusted. It will be appreciated that other scanning configurations could be used during array fabrication. It will also be appreciated that both transporters 60 and 100, or either one of them, with suitable construction, could be used to perform the foregoing scanning of head 210 with respect to substrate 10. Thus, when the present application recites ∼positioning", ∼moving", or similar, one element (such as head 210) in relation to another element (such as one of the stations 20 or substrate 10) it will be understood that any required moving can be accomplished by moving either element or a combination of both of them. The head 210, the transporter system, and processor 140 together act as the deposition system of the apparatus. An encoder 30 communicates with processor 140 to provide data on the exact location of substrate station 20 (and hence substrate 10 if positioned correctly on substrate station 20), while encoder 34 provides data on the exact location of holder 208 (and hence head 210 if positioned correctly on holder 208). Any suitable encoder, such as an optical encoder, may be used which provides data on linear position.

Processor 140 also has access through a communication module 144 to a communication channel 180 to communicate with a remote station. Communication channel 180 may, for example, be a Wide Area Network (∼WAN"), telephone network, satellite network, or any other suitable communication channel.

Each of one or more heads 210 may be of a type similar to that used in an ink jet type of printer and may, for example, include five or more chambers (at least one for each of four nucleoside phosphoramidite monomers plus at least one for an activator solution) each communicating with a corresponding set of multiple drop dispensing orifices and multiple ejectors which are positioned in the chambers opposite respective orifices. Each ejector is in the form of an electrical resistor operating as a heating element under control of processor 140 (although piezoelectric elements could be used instead). Each orifice with its associated ejector and portion of the chamber, defines a corresponding pulse jet. It will be appreciated that head 210 could, for example, have more or less pulse jets as desired (for example, at least ten or at least one hundred pulse jets, with their nozzles organized in rows and columns). Application of a single electric pulse to an ejector will cause a droplet to be dispensed from a corresponding orifice. Certain elements of the head 210 can be adapted from parts of a commercially available thermal inkjet print head device available from Hewlett-Packard Co. as part no. HP51645A. A suitable head construction is described in U.S. Patent 6,461,812. Alternatively, multiple heads could be used instead of a single head 210, each being similar in construction to head 210 and being movable in unison by the same transporter or being provided with respective transporters under control of processor 140 for independent movement. In this alternate configuration, each head may dispense a corresponding biomonomer (for example, one of four nucleoside phosphoramidites) or an activator solution.

Each head of head system 78 may also be of a type similar to that of each head 210, as already described. However, since each head will deliver only liquid drops of one type (solvent, or one of the two silanes) each head need only have one chamber to provide fluid to all the pulse jets of that head.

As is well known in the ink jet print art, the amount of fluid that is expelled in a single activation event of a pulse jet, can be controlled by changing one or more of a number of parameters, including the orifice diameter, the orifice length (thickness of the orifice member at the orifice), the size of the deposition chamber, and the size of the heating element, among others. The amount of fluid that is expelled during a single activation event is generally in the range about 0.1 to 1000 pL, usually about 0.5 to 500 pL and more usually about 1.0 to 250 pL. A typical velocity at which the fluid is expelled from the chamber is more than about 1 m/s, usually more than about 10 m/s, and may be as great as about 20 m/s or greater. As discussed above, when the orifice is in motion with respect to the substrate surface at the time an ejector is activated, the actual site of deposition of the material will not be the location that is at the moment of activation perpendicularly aligned with an orifice. However, the actual deposited location will be predictable for the given distances and velocities.

The apparatus further includes a display 310, speaker 314, and operator input device 312. Operator input device 312 may, for example, be a keyboard, mouse, or the like. Processor 140 has access to a memory 141, and controls print head system 78 and print head 210 (specifically, the activation of the ejectors therein), operation of the transporter system and the third transporter 72, and operation of display 310 and speaker 314. Memory 141 may be any suitable device in which processor 140 can store and retrieve data, such as magnetic, optical, or solid state storage devices (including magnetic or optical disks or tape or RAM, or any other suitable device, either fixed or portable). Processor 140 may include a general purpose digital microprocessor suitably programmed from a computer readable medium carrying necessary program code, to execute all of the steps required by the present invention, or any hardware or software combination which will perform those or equivalent steps. The programming can be provided remotely to processor 141 through communication channel 180, or previously saved in a computer program product such as memory 141 or some other portable or fixed computer readable storage medium using any of those devices mentioned below in connection with memory 141. For example, a magnetic or optical disk 324a may carry the programming, and can be read by disk writer/reader 326. A cutter 152 is provided to cut substrate 10 into individual array units 15 each carrying a corresponding array 12.

The operation of the fabrication station will now be described. It will be assumed that a substrate 10 is already mounted on substrate station 70. In this case the substrate is functionalized using the toluene/water solvent, and first and second silanes, in accordance with the method already described. To accomplish this transporter system 72 advances the mounted substrate 10 beneath head system 78 while drops of solvent are deposited to provide the continuous layer of solvent with no gaps, as already described. This process can be repeated but with drops containing the second silane then being deposited. The first silane may be included in the drops with the second silane or the foregoing can be repeated in the case where the first silane is delivered as drops of a separate solution. The substrate may be transferred to the holding chamber between the second and first silane (if separate) and following application of both, using a robot arm or manually by an operator, in accordance with the method as already described.

The substrate with the functionalized surface 11a may then be transferred to the substrate station 20 either manually or by the robot arm. It will be assumed that processor 140 is programmed with the necessary layout information to fabricate target arrays 12. Using information such as the foregoing target layout and the number and location of drop dispensers in head 210, processor 140 can then determine a reagent drop deposition pattern. Alternatively, such a pattern could have been determined by another processor (such as a remote processor) and communicated to memory 141 through communication channel 180 or by forwarding a portable storage medium carrying such pattern data for reading by reader/writer 326. Processor 140 controls fabrication, in accordance with the deposition pattern, to generate the one or more arrays 12 on substrate 10 by depositing for each target feature during each cycle, a reagent drop set as previously described. Drops are deposited from the head while moving along each line of the raster during scanning. No drops are dispensed for features or otherwise during line transitioning. Processor 140 also sends substrate 10 to flood station 68 for cycle intervening or final steps as required, all in accordance with the conventional *in situ* polynucleotide array fabrication process described above. The substrate 10 may then be sent to a cutter 152 wherein portions of substrate 10 carrying one ore more arrays 12 are separated from the remainder of substrate 10, to provide multiple array units 15 each with one or more arrays 12. One or more array units 15 may then be forwarded to one or more remote users. Processor 140 also causes deposition of drops from all multi-dispenser drop groups to be deposited at separate test locations, such as at a test pattern 250 which may be separate from arrays 12 as already described above. The foregoing array fabrication sequence can be repeated at the fabrication station as desired for multiple substrates 10 in turn.

During array fabrication errors can be monitored and used in any of the manners described in Japanese Patent Publication No. 2001-02155 (Great Britain patent publication no. 2355716), and US 6,232,072. Optionally characteristics of the fabricated arrays can be included in a code applied to the array substrate or a housing, or a file linkable to such code, in a manner as described in the foregoing patent application and US 6,180,351.

Following receipt by a user of an array according to the present invention, it will typically be exposed to a contiguous layer of a same sample (for example, a fluorescently labeled polynucleotide or protein containing sample) and the array then read. Reading of the array may be accomplished by illuminating the array and reading the location and intensity of resulting fluorescence at each feature of the array,. For example, a scanner may be used for this purpose which is similar to the AGILENT MICROARRAY SCANNER manufactured by Agilent Technologies, Palo Alto, CA. Other suitable apparatus and methods are described in U.S. patent applications: Serial No. 09/846125 -Reading Multi-Featured Arrays" by Dorsel et al.; and US 6,406,849. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US 6,251,685, US 6,221,583 and elsewhere). Feature extraction (in which features and their corresponding signals are identified in an image of a read array) can be performed using procedures such as described in US 6,591,196, European Patent Publication No. 1162572, and U.S. Patent Publication No. 20020193962 A1, all under the title ∼Method And System For Extracting Data From Surface Array Deposited Features ". Results from the reading may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample, or whether or not a pattern indicates a particular condition of an organism from which the sample came). The results of the reading (processed or not) may be forwarded (such as by communication) to a remote location if desired, and received there for further use (such as further processing).

Modifications in the particular embodiments described above are, of course, possible. For example, each unit 15 may be contained with a suitable housing. Such a housing may include a closed chamber accessible through one or more ports normally closed by septa, which carries the substrate 10. Where a pattern of arrays is desired, any of a variety of geometries may be constructed other than the organized rows and columns of arrays 12 of FIG 1. For example, arrays 12 can be arranged in a series of curvilinear rows across the substrate surface (for example, a series of concentric circles or semi-circles of spots), and the like. The length of the elongated features could be oriented along these or the linear rows described above, or at any angle thereto as described above in connection with linear rows of features. Similarly, as mentioned, the pattern of features 16 may be varied from the organized rows and columns of spots in FIG 2 to include, for example, a series of curvilinear rows across the substrate surface (for example, a series of concentric circles or semi-circles of spots), and the like.

The substrate surface onto which the polynucleotide compositions or other moieties is deposited may be porous or non-porous, smooth or substantially planar, or have irregularities, such as depressions or elevations. The substrate may be of one material or of multi-layer construction. Where a pattern of arrays is desired, any of a variety of geometries may be constructed other than the organized rows and columns of arrays 12 of FIG 1. For example, arrays 12 can be arranged in a series of curvilinear rows across the substrate surface (for example, a series of concentric circles or semi-circles of spots), and the like. Similarly, the pattern of features 16 may be varied from the organized rows and columns of features in FIG 2 to include, for example, a series of curvilinear rows across the substrate surface(for example, a series of concentric circles or semi-circles of spots), and the like. While various configurations of the features can be used, the user should be provided with some means (for example, through the array identifier) of being able to ascertain at least some characteristics of the features (for example, any one or more of feature composition, location, size, performance characteristics in terms of significance in variations of binding patterns with different samples, or the like). The configuration of the array may be selected according to manufacturing, handling, and use considerations. The present methods and apparatus may be used to fabricate and use arrays of other biopolymers, polymers, or other moieties on surfaces in a manner analogous to those described above. Accordingly, reference to polymers, biopolymers, or polynucleotides or the like, can often be replaced with reference to ~chemical moieties ".

Various further modifications to the particular embodiments described above are, of course, possible. Accordingly, the present invention is not limited to the particular embodiments described in detail above.

## Claims

1. A method of fabricating an array of multiple chemical probes bonded to a surface of a substrate at different features of the array, comprising:
(a) depositing drops comprising a linking agent onto the surface, so that the linking agent will bind to the substrate surface; and
(b) depositing drops comprising the chemical probes or probe precursors at the multiple feature locations, so that the probes or probe precursors bind to the linking agent at the feature locations;
(c) repeating (b) as needed so as to form the array.

2. A method according to claim 1 wherein the drops comprising the linking reagent are delivered from a pulse jet.

3. A method according to claim 1 wherein the array is a polynucleotide or polyamino acid array and the drops comprise nucleoside or amino acid monomers.

4. A method of fabricating an array of multiple chemical probes bonded to a surface of a substrate at different features of the array according to claim 1, comprising:
(a) depositing drops comprising a linking agent onto the surface which drops together cover a continuous area over the feature locations of the array, so that the linking agent will bind to the substrate surface over the covered continuous area.

5. A method according to claim 4 additionally comprising depositing drops comprising a solvent onto the surface, which drops together cover a continuous area over the feature locations of the array.

6. A method according to claim 5 wherein solvent is deposited at a feature location prior to deposition of the probe or probe precursors.

7. A method according to claim 4 wherein drops comprising probe precursors are deposited in (b).

8. A method according to claim 4 additionally comprising depositing drops comprising an additional agent onto the surface, which drops together cover a continuous area over the feature locations of the array and which may be the same or different from those drops comprising the linking agent, so that the additional agent will bind to the substrate surface over the covered continuous area but will not bind to the probe or probe precursors.

9. A method according to claim 8 wherein the drops comprising the linking reagent and the drops comprising the additional agent, are different drops.

10. A method according to claim 4 wherein the drops comprising a linking reagent are deposited from pulse jets.

11. A method according to claim 9 wherein the drops comprising the linking reagent and drops comprising the additional agent, are deposited from different pulse jets.

12. A method according to claim 9 wherein the pulse jets are piezoelectric pulse jets.

13. A method according to claim 8 wherein the substrate surface has reactive hydrophilic moieties thereon, and wherein the additional agent is a first silane and the linking agent is a second silane, the first silane having the formula R¹-Si(R^{L}R^{x}R^{y}) and the second silane having the formula R²-(L)ₙ-Si(R^{L}R^{x}R^{y}) so that binding to the surface provides -Si-R¹ groups and -Si-(L)ₙ-R² groups thereon, wherein the R^{L}, moieties, which may be the same or different, are leaving groups, the R^{x} and R^{y} are independently lower alkyl or leaving groups, R¹ is a chemically inert moiety that upon binding to the substrate surface lowers the surface energy thereof, n is 0 or 1, L is a linking group, and R² is a functional group enabling covalent binding of a molecular moiety or a modifiable group that may be converted to such a functional group.

14. A method according to claim 13 wherein the reactive hydrophilic moieties are selected from the group consisting of hydroxyl, carboxyl, thiol, amino, and combinations thereof.

15. A method according to claim 14, wherein the reactive hydrophilic moieties are hydroxyl groups.

16. A method according to claim 13, wherein the R^{L} are selected from the group consisting of halogen and alkoxy.

17. A method of using an array, comprising exposing an array produced by the method of claim 1 to a sample.

18. A method according to claim 17 additionally comprising reading the array.

19. A method comprising forwarding a result of a reading obtained by the method of claim 18, to a remote location.

20. A method comprising transmitting data representing a result of a reading obtained by the method of claim 18.

21. A method comprising receiving a result of a reading obtained by the method of claim 18.

22. An array produced according to the method of claim 1.

23. A method of producing a surface modified substrate for fabricating an array of multiple chemical probes comprising depositing drops comprising a linking agent onto the surface, so that the linking agent will bind to the substrate surface.

24. A method according to claim 23 wherein the substrate is glass.

25. A method according to claim 23 additionally comprising depositing drops comprising an additional agent onto the surface, which drops together cover a continuous area over the surface and which may be the same or different from those drops comprising the linking agent, so that the additional agent will bind to the substrate surface over the covered continuous area.

26. A method according to claim 25 wherein the drops comprising the linking reagent and the drops comprising the additional agent, are different drops.

27. An apparatus for fabricating an array having multiple chemical features on a substrate, comprising:
a substrate holder on which the substrate can be mounted;
a first drop deposition system to deposit drops onto a mounted substrate while being spaced therefrom;
a second drop deposition system to deposit drops of the chemicals or chemical precursors; and
a processor which controls the drop deposition systems so that the deposited drops from the first drop deposition system together cover a continuous area over the feature locations on the surface, while the deposited drops from the second drop deposition system are deposited at feature locations positioned on the continuous area so as to form the array.

28. An apparatus according to claim 27 wherein the drop deposition system comprises pulse jets that are thermoelectric or piezoelectric pulse jets.

29. A computer program product for use with an apparatus for fabricating an array having multiple chemical features on a substrate, the program product comprising a computer readable storage medium having a computer program stored thereon which controls the apparatus to perform the method of:
(a) depositing drops comprising a linking agent which cover a continuous area on the substrate over the feature locations of the array; then
(b) for each of multiple features, depositing multiple drops at least some of which carry the chemicals or chemical precursors, onto the substrate from a drop deposition head system of the apparatus while the head system is spaced from the substrate, so as to fabricate the array.

30. A computer program product according to claim 29 wherein the program controls movement of a transporter and multiple pulse jets of a deposition head system so as to deposit drops which cover the continuous area on the substrate on which the features will be located.

## Patentansprüche

1. Ein Verfahren zum Herstellen eines Arrays von mehreren chemischen Sonden, die an verschiedenen Merkmalen des Arrays an eine Oberfläche eines Substrats gebondet sind, wobei das Verfahren folgende Schritte umfasst:
(a) Aufbringen von Tropfen, die ein Verbindungsmittel umfassen, auf die Oberfläche, so dass sich das Verbindungsmittel an die Substratoberfläche bindet; und
(b) Aufbringen von Tropfen, die die chemischen Sonden oder Sondenvorläufer umfassen, an den mehreren Merkmalspositionen, so dass sich die Sonden oder Sondenvorläufer an den Merkmalspositionen an das Verbindungsmittel binden;
(c) Wiederholen von (b) nach Bedarf, um das Array zu bilden.

2. Ein Verfahren gemäß Anspruch 1, bei dem die das Verbindungsreagens umfassenden Tropfen aus einem Pulsstrahl abgegeben werden.

3. Ein Verfahren gemäß Anspruch 1, bei dem das Array ein Polynucleotid- oder Polyaminsäure-Array ist und die Tropfen Nucleosid- oder Aminsäuremonomere umfassen.

4. Ein Verfahren zum Herstellen eines Arrays mehrerer chemischer Sonden, die an verschiedenen Merkmalen des Arrays gemäß Anspruch 1 an eine Oberfläche eines Substrats gebondet sind, wobei das Verfahren folgenden Schritt umfasst:
(a) Aufbringen von Tropfen, die ein Verbindungsmittel umfassen, auf die Oberfläche, wobei die Tropfen zusammen einen zusammenhängenden Bereich über den Merkmalspositionen des Arrays bedecken, so dass sich das Verbindungsmittel über dem bedeckten zusammenhängenden Bereich an die Substratoberfläche bindet.

5. Ein Verfahren gemäß Anspruch 4, das zusätzlich ein Aufbringen von Tropfen, die ein Lösungsmittel umfassen, auf die Oberfläche umfasst, wobei die Tropfen zusammen einen zusammenhängenden Bereich über den Merkmalspositionen des Arrays bedecken.

6. Ein Verfahren gemäß Anspruch 5, bei dem vor einer Aufbringung der Sonde oder der Sondenvorläufer ein Lösungsmittel an einer Merkmalsposition aufgebracht wird.

7. Ein Verfahren gemäß Anspruch 4, bei dem Tropfen, die Sondenvorläufer umfassen, bei (b) aufgebracht werden.

8. Ein Verfahren gemäß Anspruch 4, das zusätzlich ein Aufbringen von Tropfen, die ein zusätzliches Mittel umfassen, auf die Oberfläche umfasst, wobei die Tropfen zusammen einen zusammenhängenden Bereich über den Merkmalspositionen des Arrays bedecken, und wobei diese dieselben wie die das Verbindungsmittel umfassenden Tropfen sein oder sich von diesen unterscheiden können, so dass sich das zusätzliche Mittel über dem bedeckten zusammenhängenden Bereich an die Substratoberfläche bindet, sich jedoch nicht an die Sonde oder die Sondenvorläufer bindet.

9. Ein Verfahren gemäß Anspruch 8, bei dem die das Verbindungsreagens umfassenden Tropfen und die das zusätzliche Mittel umfassenden Tropfen unterschiedliche Tropfen sind.

10. Ein Verfahren gemäß Anspruch 4, bei dem die ein Verbindungsreagens umfassenden Tropfen aus Pulsstrahlen aufgebracht werden.

11. Ein Verfahren gemäß Anspruch 9, bei dem die das Verbindungsreagens umfassenden Tropfen und das zusätzliche Mittel umfassende Tropfen aus unterschiedlichen Pulsstrahlen aufgebracht werden.

12. Ein Verfahren gemäß Anspruch 9, bei dem die Pulsstrahlen piezoelektrische Pulsstrahlen sind.

13. Ein Verfahren gemäß Anspruch 8, bei dem die Substratoberfläche reaktive hydrophile Anteile auf derselben aufweist, und bei dem das zusätzliche Mittel ein erstes Silan ist und das Verbindungsmittel ein zweites Silan ist, wobei das erste Silan die Formel R¹⁻Si(R^{L}R^{x}R^{y}) aufweist und das zweite Silan die Formel R²⁻(L)ₙ-Si(R^{L}R^{x}R^{y}) aufweist, so dass ein Binden an die Oberfläche -Si-R¹-Gruppen und -Si-(L)ₙ-R²-Gruppen auf derselben liefert, wobei die R^{L}-Anteile, die dieselben oder unterschiedlich sein können, Austrittsgruppen sind, das R^{x} und das R^{y} unabhängig voneinander Niederes-Alkyl- oder Austrittsgruppen sind, R¹ ein chemisch inerter Anteil ist, der auf ein Binden an die Substratoberfläche hin die Oberflächenenergie derselben verringert, n 0 oder 1 ist, L eine Verbindungsgruppe ist und R² eine funktionelle Gruppe ist, die eine kovalente Bindung eines molekularen Anteils oder einer modifizierbaren Gruppe, die in eine derartige funktionelle Gruppe umgewandelt werden kann, ermöglicht.

14. Ein Verfahren gemäß Anspruch 13, bei dem die reaktiven hydrophilen Anteile aus der Gruppe ausgewählt sind, die aus Hydroxyl, Carboxyl, Thiol, Amino und Kombinationen derselben besteht.

15. Ein Verfahren gemäß Anspruch 14, bei dem die reaktiven hydrophilen Anteile Hydroxylgruppen sind.

16. Ein Verfahren gemäß Anspruch 13, bei dem die R^{L} aus der Gruppe ausgewählt sind, die aus Halogen und Alkoxy besteht.

17. Ein Verfahren zum Verwenden eines Arrays, das ein Inkontaktbringen eines anhand des Verfahrens gemäß Anspruch 1 erzeugten Arrays mit einer Probe umfasst.

18. Ein Verfahren gemäß Anspruch 17, das zusätzlich ein Ablesen des Arrays umfasst.

19. Ein Verfahren, das ein Weiterleiten eines Ergebnisses eines anhand des Verfahrens gemäß Anspruch 18 erhaltenen Ablesewerts an eine ferne Position umfasst.

20. Ein Verfahren, das ein Senden von Daten, die ein Ergebnis eines anhand des Verfahrens gemäß Anspruch 18 erhaltenen Ablesewerts darstellen, umfasst.

21. Ein Verfahren, das ein Empfangen eines Ergebnisses eines anhand des Verfahrens gemäß Anspruch 18 erhaltenen Ablesewerts umfasst.

22. Ein Array, das nach dem Verfahren gemäß Anspruch 1 erzeugt wird.

23. Ein Verfahren zum Erzeugen eines oberflächenmodifizierten Substrats zum Herstellen eines Arrays mehrerer chemischer Sonden, das ein Aufbringen von ein Verbindungsmittel umfassenden Tropfen auf die Oberfläche umfasst, so dass sich das Verbindungsmittel an die Substratoberfläche bindet.

24. Ein Verfahren gemäß Anspruch 23, bei dem das Substrat Glas ist.

25. Ein Verfahren gemäß Anspruch 23, das zusätzlich ein Aufbringen von Tropfen, die ein zusätzliches Mittel umfassen, auf die Oberfläche umfasst, wobei die Tropfen zusammen einen zusammenhängenden Bereich über der Oberfläche bedecken, und wobei diese dieselben wie die das Verbindungsmittel umfassenden Tropfen sein oder sich von diesen unterscheiden können, so dass sich das zusätzliche Mittel über dem bedeckten zusammenhängenden Bereich an die Substratoberfläche bindet.

26. Ein Verfahren gemäß Anspruch 25, bei dem die das Verbindungsreagens umfassenden Tropfen und die das zusätzliche Mittel umfassenden Tropfen unterschiedliche Tropfen sind.

27. Eine Vorrichtung zum Herstellen eines Arrays, das mehrere chemische Merkmale aufweist, auf einem Substrat, die folgende Merkmale umfasst:
eine Substrathaltevorrichtung, an der das Substrat angebracht werden kann;
ein erstes Tropfenaufbringungssystem, um Tropfen auf ein angebrachtes Substrat aufzubringen und dabei von demselben beabstandet zu sein;
ein zweites Tropfenaufbringungssystem, um Tropfen der Chemikalien oder chemischen Vorläufer aufzubringen; und
einen Prozessor, der die Tropfenaufbringungssysteme steuert, so dass die aufgebrachten Tropfen aus dem ersten Tropfenaufbringungssystem zusammen über den Merkmalspositionen auf der Oberfläche einen zusammenhängenden Bereich bedecken, während die aufgebrachten Tropfen aus dem zweiten Tropfenaufbringungssystem an Merkmalspositionen aufgebracht werden, die auf dem zusammenhängenden Bereich positioniert sind, um das Array zu bilden.

28. Eine Vorrichtung gemäß Anspruch 27, bei der das Tropfenaufbringungssystem Pulsstrahlen umfasst, die thermoelektrische oder piezoelektrische Pulsstrahlen sind.

29. Ein Computerprogrammprodukt zur Verwendung bei einer Vorrichtung zum Herstellen eines Arrays, das mehrere chemische Merkmale auf einem Substrat aufweist, wobei das Programmprodukt ein computerlesbares Speicherungsmedium umfasst, auf dem ein Computerprogramm gespeichert ist, das die Vorrichtung dahin gehend steuert, das folgende Verfahren durchzuführen:
(a) Aufbringen von ein Verbindungsmittel umfassenden Tropfen, die über den Merkmalspositionen des Arrays einen zusammenhängenden Bereich auf dem Substrat bedecken; anschließend
(b) für jedes von mehreren Merkmalen, Aufbringen mehrerer Tropfen, von denen zumindest manche die Chemikalien oder chemischen Vorläufer tragen, aus einem Tropfenaufbringungskopfsystem der Vorrichtung auf das Substrat, während das Kopfsystem von dem Substrat beabstandet ist, um das Array herzustellen.

30. Ein Computerprogrammprodukt gemäß Anspruch 29, bei dem das Programm eine Bewegung eines Transporters und mehrerer Pulsstrahlen eines Aufbringungskopfsystems dahin gehend steuert, Tropfen aufzubringen, die den zusammenhängenden Bereich auf dem Substrat, auf dem die Merkmale angeordnet sein werden, bedecken.

## Revendications

1. Procédé de fabrication d'une matrice de multiples sondes chimiques liées à une surface d'un substrat à différentes entités de la matrice, comprenant les étapes consistant à :
(a) déposer des gouttes comprenant un agent de liaison sur la surface, de sorte que l'agent de liaison se lie à la surface du substrat ; et
(b) déposer des gouttes comprenant les sondes chimiques ou des précurseurs de sondes en de multiples emplacements d'entité, de sorte que les sondes ou les précurseurs de sondes se lient à l'agent de liaison aux emplace-ments d'entité ;
(c) répéter (b) selon le besoin pour former la matrice.

2. Procédé selon la revendication 1, dans lequel les gouttes comprenant le réactif de liaison sont délivrées par jet pulsé.

3. Procédé selon la revendication 1, dans lequel la matrice est une matrice de polynucléotide ou d'acide polyaminé et les gouttes comprennent des monomères de nucléoside ou d'acide aminé.

4. Procédé de fabrication d'une matrice de multiples sondes chimiques liées à une surface d'un substrat à différentes entités de la matrice selon la revendication 1, comprenant l'étape consistant à déposer des gouttes comprenant un agent de liaison sur la surface, lesquelles gouttes ensemble recouvrent une zone continue sur les emplacements d'entité de la matrice, de sorte que l'agent de liaison se lie à la surface du substrat sur la zone continue recouverte.

5. Procédé selon la revendication 4 comprenant en outre le dépôt de gouttes comprenant un solvant sur la surface, lesdites gouttes ensemble recouvrent une zone continue sur les emplacements d'entité de la matrice.

6. Procédé selon la revendication 5, dans lequel le solvant est déposé à un endroit de la caractéristique avant le dépôt de la sonde ou des précurseurs de sonde.

7. Procédé selon la revendication 4, dans lequel les gouttes comprenant les précurseurs de sonde sont déposées dans (b).

8. Procédé selon la revendication 4 comprenant en outre le dépôt de gouttes comprenant un agent supplémentaire sur la surface, lesquelles gouttes ensemble recouvrent une zone continue sur les emplacements d'entité de la matrice et qui peuvent être identiques ou différentes des gouttes comprenant l'agent de liaison, de sorte que l'agent supplémentaire se lie à la surface du substrat sur la zone continue recouverte mais ne se lie pas à la sonde ou aux précurseurs de sonde.

9. Procédé selon la revendication 8, dans lequel les gouttes comprenant le réactif de liaison et les gouttes comprenant l'agent supplémentaire, sont des gouttes différentes.

10. Procédé selon la revendication 4, dans lequel les gouttes comprenant un réactif de liaison sont déposées par jets pulsés.

11. Procédé selon la revendication 9, dans lequel les gouttes comprenant le réactif de liaison et les gouttes comprenant l'agent supplémentaire, sont déposées par différents jets pulsés.

12. Procédé selon la revendication 9, dans lequel les jets pulsés sont des jets pulsés piézoélectriques.

13. Procédé selon la revendication 8, dans lequel la surface du substrat a des fragments hydrophiles réactifs, et dans lequel l'agent supplémentaire est un premier silane et l'agent de liaison est un deuxième silane, le premier silane ayant la formule R¹-Si (R^{L}R^{x}R^{y}) et le deuxième silane ayant la formule R²- (L) ₙ₋Si (R^{L}R^{x}R^{y}) de sorte que la liaison à la surface donne les groupes -Si-R¹ et les groupes -Si-(L)ₙ-R², où les fragment R^{L}, qui peuvent être identiques ou différents, sont des groupes partants, R^{x} et R^{y} sont indépendamment des groupes alkyles inférieurs ou partants, R¹ est un fragment chimiquement inerte qui lors de la liaison à la surface du substrat réduit l'énergie de surface de celui-ci, n vaut 0 ou 1, L est un groupe de liaison, et R² est un groupe fonctionnel permettant la liaison covalente d'un fragment moléculaire ou d'un groupe modifiable qui peut être converti en un tel groupe fonctionnel.

14. Procédé selon la revendication 13, dans lequel les fragments hydrophiles réactifs sont choisis dans le groupe consistant en les groupes hydroxyle, carboxyle, thiol, amino, et des mélanges de ceux-ci.

15. Procédé selon la revendication 14, dans lequel les fragments hydrophiles réactifs sont des groupes hydroxyles.

16. Procédé selon la revendication 13, dans lequel R^{L} est choisi dans le groupe consistant en un atome d'halogène et un groupe alcoxy.

17. Procédé d'utilisation d'une matrice, comprenant l'exposition d'une matrice produite par le procédé de la revendication 1 à un échantillon.

18. Procédé selon la revendication 17 comprenant en outre la lecture de la matrice.

19. Procédé comprenant l'envoie d'un résultat d'une lecture obtenue par le procédé selon la revendication 18, vers un emplacement éloigné.

20. Procédé comprenant la transmission des données représentant un résultat d'une lecture obtenue par le procédé selon la revendication 18.

21. Procédé comprenant la réception d'un résultat d'une lecture obtenue par le procédé selon la revendication 18.

22. Matrice produite selon le procédé de la revendication 1.

23. Procédé de production d'un substrat à surface modifiée pour la fabrication d'une matrice de multiples sondes chimiques comprenant le dépôt de gouttes comprenant un agent de liaison sur la surface, de sorte que l'agent de liaison se lie à la surface du substrat.

24. Procédé selon la revendication 23, dans lequel le substrat est le verre.

25. Procédé selon la revendication 23 comprenant en outre le dépôt de gouttes comprenant un agent supplémentaire sur la surface, lesquelles gouttes ensemble recouvrent une zone continue sur la surface et qui peuvent être identiques ou différentes des gouttes comprenant l'agent de liaison, de sorte que l'agent supplémentaire se lie à la surface du substrat sur la zone continue recouverte.

26. Procédé selon la revendication 25, dans lequel les gouttes comprenant le réactif de liaison et les gouttes comprenant l'agent supplémentaire, sont des gouttes différentes.

27. Appareil pour la fabrication d'une matrice ayant de multiples entités chimiques sur un substrat, comprenant :
■ un support pour le substrat sur lequel le substrat peut être monté ;
■ un premier système de dépôt de gouttes pour déposer les gouttes sur un substrat monté tout en étant espacé de celui-ci ;
■ un deuxième système de dépôt de gouttes pour déposer des gouttes de produits chimiques ou de précurseurs chimiques ; et
■ un processeur qui contrôle les systèmes de dépôt de gouttes de sorte que les gouttes déposées à partir du premier système de dépôt de gouttes ensemble recouvrent une surface continue sur les emplacements d'entité sur la surface, tandis que les gouttes déposées à partir du deuxième système de dépôt de gouttes sont déposées en des emplacements d'entité placés sur la zone continue de sorte à former la matrice.

28. Appareil selon la revendication 27, dans lequel le système de dépôt de gouttes comprend des jets pulsés qui sont des jets pulsés thermoélectriques ou piézoélectriques.

29. Produit d'un programme informatique pour une utilisation avec un appareil pour la fabrication d'une matrice ayant de multiples entités chimiques sur un substrat, le produit de programme comprenant un support de stockage pouvant être lu par ordinateur ayant un programme informatique stocké sur celui-ci qui contrôle l'appareil pour réaliser le procédé consistant à :
(a) déposer des gouttes comprenant un agent de liaison qui recouvrent une zone continue sur le substrat sur les emplacements d'entité de la matrice ; puis
(b) pour chacune des multiples entités, déposer de multiples gouttes dont au moins certaines portent les produits chimiques ou les précurseurs de produits chimiques, sur le substrat à partir d'un système de tête de dépôt de gouttes de l'appareil tandis que le système de tête est espacé du substrat, de sorte à fabriquer la matrice.

30. Produit de programme informatique selon la revendication 29, dans lequel le programme contrôle le mouvement d'un transporteur et des multiples jets pulsés d'un système de tête de dépôt de sorte à déposer les gouttes qui recouvrent la zone continue sur le substrat sur lequel les caractéristiques vont se placer.
